# EUROPÄISCHE PATENTSCHRIFT

(11) **EP 0 312 863 B1**
(45) Veröffentlichungstag und Bekanntmachung des Hinweises auf die Patenterteilung: **09.02.1994**
(21) Anmeldenummer: 88116718.3
(22) Anmeldetag: 08.10.1988
(51) Int. Cl.: A23F 5/20, A23F 5/22, B01D 11/02

(54) **Vorrichtung zum kontinuierlichen Entcoffeinieren von Rohkaffee**
Apparatus for continuous decaffeination of green coffee
Installation de décaféination en continu de café vert

(30) Priorität: 21.10.1987 DE 3735636
(43) Veröffentlichungstag der Anmeldung: 26.04.1989
(73) Patentinhaber: Kraft Jacobs Suchard SA, CH-8008 Zürich (CH)
(72) Erfinder: Schweinfurth, Hermann, Dipl.-Ing. Dr., D-2800 Bremen 1 (DE)
(74) Vertreter: Bolte, Erich, Dipl.-Ing.

(56) Entgegenhaltungen:
- EP-A- 0 078 088
- EP-A- 0 111 375
- DE-A- 2 337 917
- DE-A- 2 733 832
- DE-A- 2 950 868
- US-A- 2 840 459

## Beschreibung

Die Erfindung betrifft eine Vorrichtung zum kontinuierlichen Entcoffeinieren von Rohkaffee, der chargenweise verschiedenen Behandlungsstufen unterzogen wird, in deren erster der Rohkaffee mit zugeführter Quellflüssigkeit vorgequollen wird, wobei nachfolgend das Coffein mit einer wässrigen Extraktionsflüssigkeit extrahiert und an einem vorbeladenen Adsorptionsmittel adsorbiert wird.

Aus der EP-B-0 008 398 ist ein Verfahren zum Entcoffeinieren von Kaffee bekannt, bei dem aus Rohkaffee Coffein über eine wässrige Flüssigkeit extrahiert wird. Die Extraktionsflüssigkeit wird über einen vorbeladenen Aktivkohle-Adsorber geführt, wobei das Coffein adsorbiert wird.

Da der Rohkaffee üblicherweise bei der Auslieferung einen Wassergehalt von 7 bis 15 g Wasser/100 g Trockenstoff aufweist, nimmt er in einer wässrigen Flüssigkeit Wasser auf. Bei diesem Quellvorgang können bis zu 160 g Wasser/100 g Trockenstoff (üblicherweise 130 g Wasser/100 g Trockenstoff) zusätzlich von der Rohkaffeebohne aufgenommen werden, wobei das Volumen der Rohkaffeebohne sich etwa verdoppelt. Um nun eine Verblockung der Kolonnenapparatur, die zum Behandeln der Rohkaffeebohnen üblicherweise verwendet wird, zu vermeiden, wird die Schüttung während des Quellvorgangs durch spezielle Maßnahmen (Fluidisierung mit Wasser oder Vorquellen in einem mechanischen Mischer) in Bewegung gehalten. Bei diesem Bewegen der Bohnen lösen sich jedoch feine Partikel von der Oberfläche der Bohnen (Silberhäutchen), die mit der Flüssigkeit mitgeschwemmt zu einer Verstopfung im nachfolgenden Aktivkohleadsorber führen.

Aus der EP-A-0 078 088 ist ein Verfahren zum Entcoffeinieren von grünen Kaffeebohnen bekannt, bei dem das Coffein mit einer wässrigen Extraktionsflüssigkeit extrahiert und an einem Adsorptionsmittel adsorbiert wird. Der Quellvorgang des Rohkaffees ist nicht näher beschrieben.

Eine Vorrichtung zum kontinuierlichen Extrahieren löslicher Stoffe ist der US 2 840 459 entnehmbar. Die Entcoffeinierung von Rohkaffee ist nicht angesprochen. Die Extraktion erfolgt in einem Karussell-Extrakteur, in dem Extraktionsflüssigkeit im Gegenstrom zu den zu behandelnden Feststoffen geführt wird. Der Karussell-Extrakteur ist mit seinen einzelnen Zellen drehend angetrieben. Oberhalb des beschriebenen Extrakteurs ist ein weiterer Karussell-Extrakteur synchron bewegbar. In diesem werden die Feststoffe zum Aufquellen in einzelnen Zellen im Kreis gefördert. Jeweils an einer bestimmten Position erfolgt eine Abgabe der Feststoffe aus dem oberen Karussell-Extrakteur in eine Zelle des unteren Karussell-Extrakteurs. Nachteilig ist, daß die Feststoffe beim Quellen im oberen Karussell-Extrakteur bis zur übergebenden Zelle bewegt werden.

Ausgehend vom obengenannten Stand der Technik ist es Aufgabe der vorliegenden Erfindung, eine vereinfachte Vorrichtung der eingangs genannten Art aufzuzeigen, bei welcher die Rohkaffeebohnen schonender als bisher, also im wesentlichen ruhend, behandelt werden können.

Diese Aufgabe wird dadurch gelöst, daß die Vorrichtung mindestens in der ersten Behandlungsstufe zur Extraktion des Coffeins einen Karussell-Extrakteur mit einer Vielzahl gleichartiger, sektorförmiger Zellen aufweist, daß ein Behälter zum Vorquellen des Rohkaffees zugleich Zelle des Karussell-Extrakteurs ist und daß der Karussell-Extrakteur derart intermittierend antreibbar ist, daß die den Rohkaffee aufnehmende Zelle während des Vorquellens nicht bewegt wird.

Überraschenderweise hat es sich gezeigt, daß eine Verblockung der Rohkaffeebohnen während ihrer Wasseraufnahme bzw. Volumenzunahme in der sektorförmigen Zelle nicht erfolgt, selbst wenn die Schüttung nicht bewegt wird. Dadurch aber, daß die Rohkaffeebohnen ruhen, kommt es zu keiner Ablösung von Partikeln auf der Oberfläche der Rohkaffeebohnen, so daß der Adsorber nicht verstopft.

Bei einem Karussellextrakteur werden die einzelnen Zellen mit ihrem Inhalt über einen feststehenden Schlitzboden gedreht, der mit einem sektorförmigen Abschnitt unterbrochen ist, so daß der Zelleninhalt in diesem Abschnitt nach unten durchfallen und abgeführt werden kann. Bei der nachfolgenden Beschreibung werden die einzelnen Zellen hinsichtlich ihrer Funktion definiert, wobei zu berücksichtigen ist, daß jede Zelle die verschiedenen Funktionen nacheinander übernimmt.

Der ersten Behandlungsstufe, in welcher der Rohkaffee vorgequollen wird, folgt die eigentliche Extraktionsstufe, die sich über mehrere Extraktionszellen hinzieht. Hierbei ist jeder Zelle eine separate (feststehende) Auffangkammer zugeordnet. Der so ausgebildete Karussellextrakteur arbeitet vorzugsweise als kontinuierlicher Perkolationsapparat nach dem Kreuz-/Gegenstromverfahren. In den einzelnen Extraktionsstufen steigt somit (entgegen der Kaffee-Transportrichtung gesehen) die Extrakt-Konzentration, wobei die Vorquell-Stufe gleichzeitig eine erste Extraktionsstufe mit maximaler Extraktkonzentration darstellt und die Extraktionsflüssigkeit aus dieser ersten Stufe zum Adsorber geführt wird.

Vorzugsweise ist der Adsorber ebenfalls als Karussellextrakteur ausgebildet, der nicht nur die (im Kreuz-/Gegenstromverfahren betriebenen) Adsorptionsstufen enthält, sondern in dem das Adsorptionsmittel vor den Adsorptionsstufen vorbeladen und nach den Adsorptionsstufen gewaschen wird. Durch diese Ausbildung ist es besonders einfach, die Extraktionsvorrichtung mit der Adsorptionsvorrichtung zu synchronisieren.

Weitere erfindungswesentliche Merkmale ergeben sich aus den Unteransprüchen und der nachfolgenden Beschreibung bevorzugter Ausführungsformen der Erfindung, die anhand von Abbildungen näher erläutert werden. Hierbei zeigen:
- Fig. 1: eine schematisierte perspektivische Darstellung eines ersten Karussellextrakteurs;
- Fig. 2: eine Block-Darstellung der ersten Behandlungsstufe des Karussellextrakteurs nach Fig. 1;
- Fig. 3: eine Blockdarstellung von zwei Extraktions-Behandlungsstufen des Karussellextrakteurs nach Fig. 1;
- Fig. 4: die letzten Behandlungsstufen und die Austragsstufe des Karussellextrakteurs nach Fig. 1;
- Fig. 5: eine schematisierte Blockdarstellung eines Karussell-Adsorbers;
- Fig. 6: einen schematisierten Vertikal-Schnitt durch eine Behandlungsstufe des Karussell-Adsorbers nach Fig. 5;
- Fig. 7: eine schematische Darstellung der Verknüpfung von Karussellextrakteur und Karussell-Adsorber; und
- Fig. 8: ein Blockschema zu dem mit der Anordnung nach Fig. 7 durchführbaren Verfahren.

In der nachfolgenden Beschreibung werden wirkungsgleiche Teile mit denselben Bezugsziffern bezeichnet.

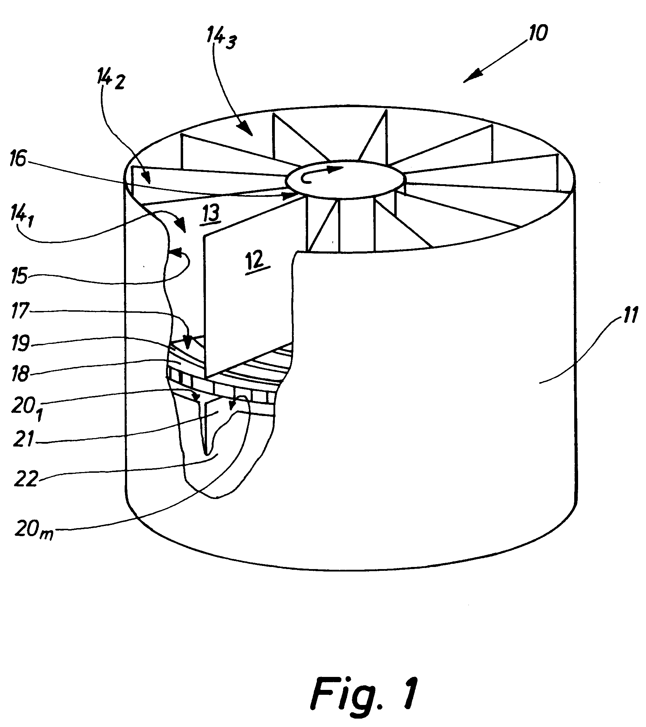

Wie aus Fig. 1 ersichtlich, umfaßt ein erster Karussellextrakteur 10 ein Gehäuse 11, in welchem mehrere, von einer gemeinsamen Achse radial sich erstreckende Zellenwände vorgesehen sind, von denen in Fig. 1 nur zwei Zellenwände mit den Bezugsziffern 12 und 13 gekennzeichnet sind. Diese ersten Zellenwände 12, 13 bilden divergierende Seitenwände einer ersten Zelle 14₁, die weiterhin von einer Außenwand 15 und einer Innenwand 16 umgrenzt ist. Der feststehende Boden besteht aus Stäben 18, die durch Schlitze 19 voneinander beabstandet sind. Der so gebildete Schlitzboden 17 ist somit flüssigkeitsdurchlässig, wobei die Schlitze 19 in ihren Abmessungen dem zu behandelnden Gut angepaßt sind.

Unter dem feststehenden Siebboden 17 sind Auffangkammern 20₁ bis 20ₘ vorgesehen, wobei ₘ der Gesamtanzahl der Zellen entspricht. Die Auffangkammern 20 sind mit Trennwänden 21 versehen und weisen eine gemeinsame Außenwand 22 auf.

Bei dem in Fig. 1 gezeigten Extrakteur 10 ist das Gehäuse 11 der Übersichtlichkeit halber oben offen gezeigt, vorzugsweise ist das Gehäuse jedoch oben ebenfalls geschlossen, so daß die ganze Anordnung hermetisch verriegelbar ist.

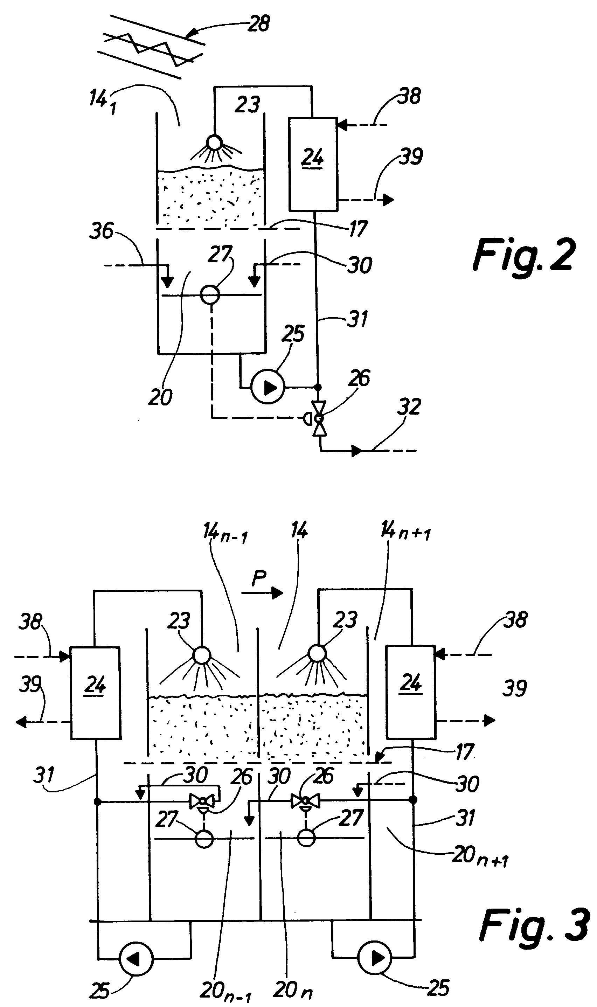

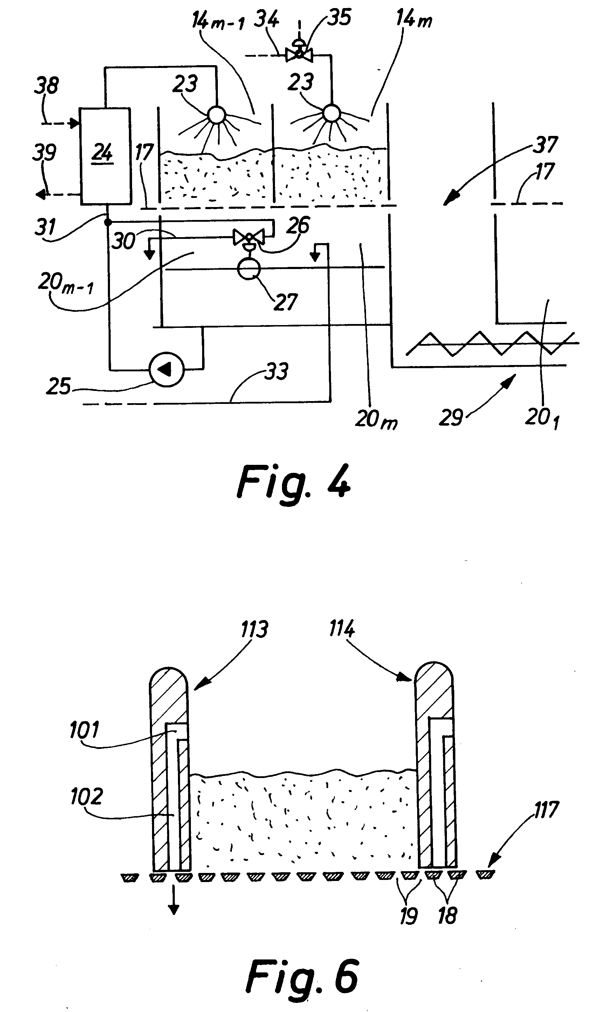

Im folgenden wird anhand der Fig. 2 bis 4 eine schematische Darstellung des Aufbaus und der Wirkungsweise des Karussellextrakteuers 10 nach Fig. 1 gegeben. Die Abbildungen zeigen hierbei eine Momentandarstellung eines Betriebszustandes mit ruhenden Zellen, wobei die Zellen mit einem definierten Takt um jeweils eine Kammerbreite bzw. Zellenbreite weitergerückt werden.

In Fig. 2 ist die erste Zelle 14₁ schematisiert dargestellt, über der eine Eintragsschnecke 28 mündet. Unter dem Siebboden 17 der ersten Zelle 14₁ befindet sich die erste Auffangkammer 20₁ so, daß durch den Siebboden 17 tropfende Flüssigkeit ausschließlich in diese Auffangkammer und nicht in benachbarte Auffangkammern gelangen kann.

Die Auffangkammer 20₁ kommuniziert an ihrem Boden mit einem Sauganschluß einer Pumpe 25, deren Druckanschluß über eine Leitung 31 durch einen Wärmetauscher 24 zu einem Sprühkopf 23 geführt ist, der über der Zelle 14₁ sitzt. Der Wärmetauscher 24 steht mit einer Heißdampfleitung 38 und einer Kondensatleitung 39 in Verbindung und ist so ausgebildet, daß aus der Kammer 20₁ abgezogene Flüssigkeit vor dem Austritt aus dem Sprühkopf 23 auf eine definierte Temperatur (vorzugsweise 80° C) aufgeheizt wird.

In die Kammer 20₁ münden eine Gegenstromleitung 30 sowie eine Quellwasserleitung 36, die weiter unten näher beschrieben werden. Weiterhin ist in der Kammer 20₁ ein Schwimmer 27 vorgesehen, der ein Ventil 26 zwischen dem Ausgang der Pumpe 25 und einer Coffein-Extraktleitung 32 derart steuert, daß ein definiertes Niveau in der Kammer 20₁ einstellbar ist.

An die in Fig. 2 gezeigte Zelle 14₁ mit Kammer 20₁ schließen sich mehrere Extraktionszellen mit darunter liegenden Auffangkammern an, von denen in Fig. 3 nur zwei vollständig gezeigt sind. Diese Extraktionszellen stimmen hinsichtlich der Berieselungseinrichtungen, bestehend aus Pumpen 25, Leitungen 31, Wärmetauscher 24 und Sprühköpfen 23 im wesentlichen mit der Berieselungseinrichtung für die erste Zelle überein, wobei jedoch das durch den Schwimmer 27 gesteuerte Ventil 26, das mit dem Druckanschluß der Pumpe 25 mit seinem einen Eingang in Verbindung steht, mit dem anderen Ausgang auf eine Gegenstromleitung 30 geführt ist, die bei dem der Kammer 20ₙ zugeordneten Ventil 26 somit in der Kammer 20ₙ₋₁ mündet. In die Kammer 20ₙ mündet dementsprechend die Gegenstromleitung 30 der Kammer 20ₙ₊₁ usw.. Die in Fig. 2 gezeigte Gegenstromleitung 30 führt somit Flüssigkeit, die aus der Kammer 20₂ stammt. Durch diese Anordnung wird ein Flüssigkeitsstrom erzeugt, der zum einen über die Berieselungseinrichtung einen Kreuzstrom darstellt, zum anderen einen entgegen der Transportrichtung der Zellen 14 (Pfeil P in Fig. 3) gerichteten Gegenstrom umfaßt.

Der letzten Extraktionszelle 14ₘ₋₁ mit einer wie zuvor beschrieben ausgebildeten Berieselungseinrichtung ist eine Waschzelle 14ₘ nachgeordnet, über der ein Sprühkopf 23 angeordnet ist, welcher über ein Ventil 35 mit einer Waschwasserleitung 34 in Verbindung steht. Die Kammer 20ₘ₋₁ der letzten Extraktionszelle geht (ohne Zwischenwand) direkt in die Kammer 20ₘ der Waschzelle über. In diese Doppelkammer mündet eine Coffeinfrei-Extraktleitung 33, deren Anschluß weiter unten näher beschrieben wird.

Nach der Waschzelle 14ₘ weist der Boden 17 einen Austragsausschnitt 37 auf, so daß beim Weitertransportieren der Zellen der Zelleninhalt durch diesen Ausschnitt 37 nach unten in einen Austrag 29 fallen und von der dort vorgesehenen Austragsschnecke abgeführt werden kann.

Die oben erwähnte Coffein-Extraktleitung 32 (Fig. 2) steht mit dem Eingang eines Adsorbers in Verbindung, in welchem in der einströmenden Flüssigkeit enthaltenes Coffein adsorbiert wird, so daß coffeinfreie Flüssigkeit aus dem (weiter unten näher beschriebenen) Adsorber in die Coffeinfrei-Extraktleitung und von da in die letzte Doppel-Kammer gelangt.

Der Zellenextrakteur ist vorzugsweise so ausgebildet, daß die Seitenwände 12,13 (siehe Fig. 1) einer jeden Zelle einen Winkel von mindestens 20° zueinander aufweisen. Die Eintragsvorrichtung 28 ist so ausgebildet, daß beim Einfüllen von Rohkaffee in der ersten Stufe eine solche Menge einfüllbar ist, daß die Schüttung bis zu einer Höhe reicht, die im wesentlichen der Sektor-Außenbreite entspricht.

Im Detail läuft das Verfahren folgendermaßen ab. Während der (vorzugsweise) einstündigen Taktzeit stehen die einen Rotor bildenden Zellenwände und alle Pumpen 25 laufen. Der in der Waschzelle 15ₘ befindliche Rohkaffee wird mit Frischwasser beregnet, das in die darunter liegende Auffangkammer gelangt, der weiterhin coffeinfreier Extrakt aus dem Adsorber über die Leitung 33 zugeführt wird. Der coffeinfreie Extrakt beinhaltet aufgrund der Vorbeladung des Adsorptionsmittels im wesentlichen alle wasserlöslichen Inhaltsstoffe des Rohkaffee bis auf Coffein.

Durch die Flüssigkeitszugaben (Waschwasser, coffeinfreier Extrakt) steigt das Flüssigkeitsniveau in der letzten Doppelkammer bis zu einem Niveau, bei welchem das Ventil 26 durch den Schwimmer 27 geöffnet wird und Flüssigkeit aus der Doppelkammer über die dieser zugeordnete Pumpe 25 in die davor liegende Auffangkammer gefördert wird. Gleichzeitig wird die in der Kammer befindliche Flüssigkeit über die Pumpe 25 (bei gleichzeitiger Erwärmung auf ca. 80° C) zur Bildung eines Kreuzstroms zum Sprühkopf 23 geführt und durchrieselt die in der Kammer 14ₘ₋₁ befindliche Rohkaffeemenge. Die Pumpe 25 ist hierbei so hinsichtlich ihrer Fördermenge gesteuert, daß die Beregnungs- bzw. Rezirkulationsmenge geringer ist als die maximale Perkolationsrate (Flutungsrate).

Durch die Niveauregulierungen in den Auffangkammern, die den davorliegenden Extraktionszellen zugeordnet sind, ergibt sich ein Flüssigkeitsstrom, wobei die Flüssigkeit eine von Kammer zu Kammer steigende Coffeinkonzentration aufweist. In der ersten Auffangkammer 20₁ (Fig. 2) befindet sich somit eine Extraktionslösung mit maximalem Coffeingehalt, wobei das Flüssigkeitsniveau in der ersten Kammer 20₁ über das vom Schwimmer 27 gesteuerte Ventil 26 konstant gehalten wird, da bei steigendem Pegel eine der zugeführten Flüssigkeitsmenge entsprechende Extraktmenge über die Leitung 32 dem Adsorber zugeführt wird und aus diesem wieder in die der letzten Extraktionszelle zugeordnete Auffangkammer gelangt.

Kurz vor Ende der Taktzeit werden alle Pumpen 25 abgestellt und die Niveauregulierung in den Auffangkammern wird außer Kraft gesetzt. Somit wird die gesamte Flüssigkeitsmenge in jeder Stufe in der jeweiligen Auffangkammer gesammelt. Nach dem Abtropfen der Flüssigkeit, das eine einstellbare Zeit andauert, wird der Antrieb des Extrakteurs wieder angestellt und die Zellen werden um eine Kammer weitergefahren. Während der Stillstandszeit der Pumpen 25 ist das Ventil 35 zur Regelung der Waschwasserzufuhr abgestellt, während der Flüssigkeitsstrom durch den Adsorber aufrechterhalten werden kann. Wenn die Zellen ihre neue Position erreicht haben, werden alle Pumpen 25 wieder eingeschaltet, wobei zunächst die Niveauregelung unwirksam gehalten wird. Nach Ablauf einer, durch eine nicht näher dargestellte Steuerungseinheit eingestellten Zeit wird die Niveauregelung wieder aktiviert. Weiterhin wird, nachdem die Zellen ihre neue Position erreicht haben, die erste Zelle - wie eingangs beschrieben - mit einer festgelegten Menge von Rohkaffee befüllt. Darüber hinaus werden während der Stillstandszeit der Pumpen 25 die Heißdampfleitungen 38 abgesperrt.

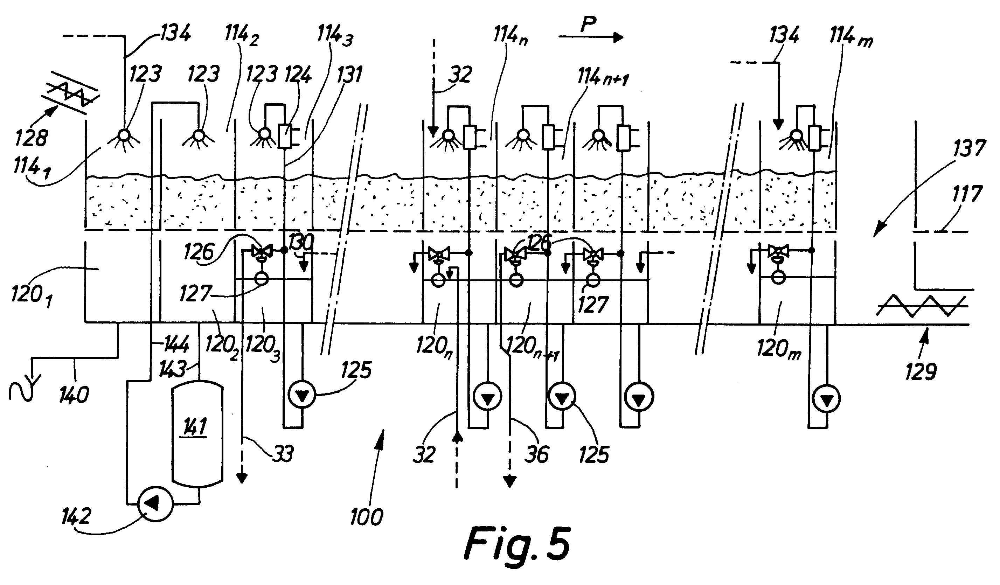

Im folgenden wird anhand der Fig. 5 der Adsorber näher beschrieben, der zwischen den Leitungen 32 und 33 sitzt.

Der Adsorber umfaßt einen zweiten Karussellextrakteur 100, über dessen erster Zelle 114₁ ein Eintrag 128 angeordnet ist, über den Adsorptionsmittel (Aktivkohle) einfüllbar ist. Die unter der ersten Zelle 114₁ liegende Auffangkammer 120₁ steht über eine Ablaufleitung 140 mit einem Ablauf in Verbindung, so daß Waschwasser, das über eine Leitung 134 und einen Sprühkopf 123 von oben auf das eingefüllte Adsorptionsmittel gesprüht wird, direkt verworfen werden kann.

Die auf die Einfüll-/Waschzelle 114₁ folgende Zelle 114₂ steht mit der ihr zugeordneten Auffangkammer 120₂ mit einem Ansetz-/Regenerationstank 141 in Verbindung, dessen Ausgangsleitung am Sauganschluß einer Beladungspumpe 142 steht, über welche das Adsorptionsmittel mit Vorbeladungsflüssigkeit aus dem Tank 141 mittels des Sprühkopfs 123 beregnet wird. Die Inhaltsstoffe der zum Vorbeladen dienenden Flüssigkeit sind näher in dem eingangs genannten europäischen Patent beschrieben. Die Flüssigkeit ist jedenfalls so eingestellt, daß die über den Eintrag 128 zugeführte, gereinigte Aktivkohle mit den Inhaltsstoffen bzw. den Inhaltsstoffen gleichen Substanzen vorbeladen wird, die nicht aus den Kaffeebohnen extrahiert werden sollen, so daß das Coffein selektiv am Adsorptionsmittel adsorbiert wird.

Auf die Vorbeladungszelle 114₂ folgt eine erste Adsorptionszelle 114₃, die mit darauffolgenden Adsorptionszellen (bis 114ₙ) in Gegenstromverbindung steht, wobei die Niveaus der Auffangkammern 120₃ bis 120ₙ Niveaureguliereinrichtungen (Schwimmer 127, Ventil 126, Gegenstromleitung 130) und Beregnungseinrichtungen (Pumpe 125, Kreuzstromleitung 131, Wärmetauscher 124, Sprühkopf 123) zur Bildung eines Kreuz-/Gegenstromes aufweisen. Die Anordnungen ähneln somit denjenigen für die Extraktionszellen des ersten Karussellextrakteurs 10.

In die Auffangkammer 120ₙ der letzten Extraktionszelle 114ₙ mündet die Coffein-Extraktleitung 32 aus der Auffangkammer 14₁ des ersten Karussellextrakteurs 10. Das vom Schwimmer 127 gesteuerte Vetnil 126 der ersten Auffangkammer 120₃ der ersten Adsorptionszelle 114₃ regelt den aus der ersten Kammer 120₃ über die Leitung 33 entnommenen Volumenstrom coffeinfreien Extraktes, welcher der Doppel-Kammer der letzten Extraktionszelle 14ₘ₋₁ zugeführt wird. An die Adsorptionszellen 114₃ bis 114ₙ schließen sich eine oder mehrere Waschzellen 114ₙ₊₁ bis 114ₘ an, die ebenso wie in der zuvor beschriebenen Weise im Kreuz-/Gegenstrom durchströmt werden, wobei Frischwasser über eine Waschwasserleitung 134 auf die letzte Waschzelle 114ₘ aufgegeben und über die Niveauregulierung der ersten Waschzelle 114ₙ₊₁ Flüssigkeit in die Leitung 36 gepumpt wird. Diese Flüssigkeit wird über die Leitung 36 der ersten (Quell-) Zelle 14₁ bzw. deren Kammer 20₁ zugeführt.

Nach der letzten Waschzelle 114ₘ ist der Siebboden 117 des zweiten Karussellextrakteurs 100 mit einem Austragsausschnitt 137 versehen, durch den das in dieser Zelle enthaltene Adsorptionsmittel nach unten zu einer Austragsschnecke 129 fallen kann.

Der Austrag 129 fördert das (gewaschene) Adsorptionsmittel zu einem hier nicht näher gezeigten Ofen, in dem die Aktivkohle bei ca. 800° C reaktiviert wird, wobei die an der Aktivkohle adsorbierten Stoffe vergast und in einem Nachbrenner verbrannt werden. Weiterhin wird Kohlenstoffstaub entfernt. Schließlich wird eine dem entfernten Staub gleiche Menge frischer Aktivkohle zugefügt, so daß die sich im Umlauf befindliche Menge an Adsorptionsmittel konstant bleibt.

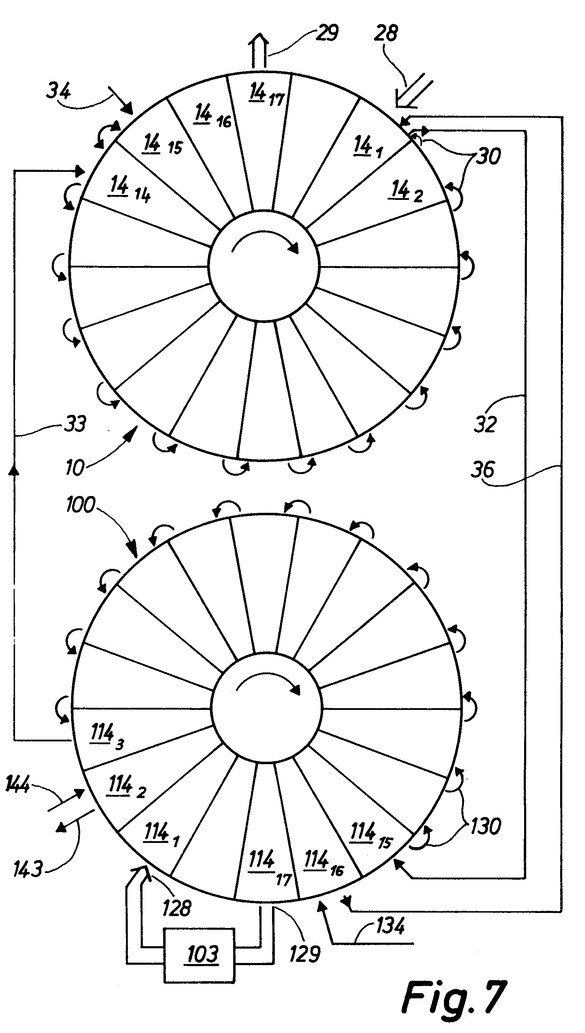

In Fig. 6 ist eine Zelle des Adsorbers 100 im schematisierten Längsschnitt gezeigt. Bei diesen Zellen sind in die Seitenwände 113, 114 Öffnungen 101 eingearbeitet, die über Kanäle 102 nach unten, bis zum Siebboden 117 führen. Die Öffnungen 101 dienen als Überlauföffnungen, welche diejenige Flüssigkeitsmenge, welche die Perkolationsrate übersteigend von den Pumpen 125 gefördert wird, direkt nach unten, in die jeweils darunter liegenden Auffangkammer leitet. Auf diese Weise können die Zellen geflutet betrieben werden.

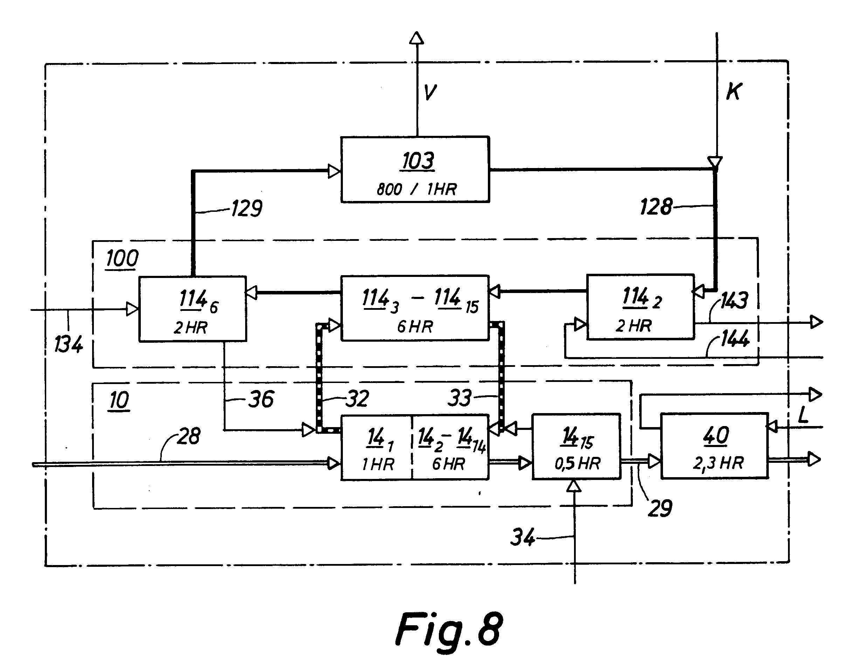

Im folgenden wird das Gesamt-Verfahren anhand der Fig. 7 und 8 näher beschrieben. Wenn bei dieser Beschreibung von "Zellen" gesprochen wird, so ist in diesem Ausdruck auch gleichzeitig die darunter liegende Auffangkammer enthalten.

Der Karussellextrakteur 10 und der Karusselladsorber 100 weisen dieselbe Zellenzahl auf und werden fahr-synchron betrieben. Der ersten Zelle 14₁ des ersten Karussellextrakteurs 10 werden über den Eintrag 28 Rohkaffee und über die Leitung 36 beladenes Waschwasser aus (einer einzigen) Waschzelle 114₁₆ des Karusselladsorbers 100 zugeführt. Weiterhin gelangt über die Gegenstromleitungen coffeinbeladener Extrakt aus der nachfolgenden Extraktionszelle 14₂ in die erste Zelle 14₁. Aus der Zelle 14₁ wird coffeinreicher Extrakt über die Leitung 32 in die letzte Adsorptionszelle 114₁₅ des Adsorbers 100 gepumpt, wobei die Menge der Summe aus den Flüssigkeitsströmen durch die Gegenstromleitung 30 und die Quellwasserleitung 36 abzüglich der von den Kaffeebohnen beim Quellen aufgenommenen Flüssigkeitsmenge entspricht. In den nachfolgenden Extraktionszellen 14₂ bis 14₁₄ sinkt der Coffeingehalt der Kaffeebohnen, bis er in der letzten Extraktionszelle 14₁₄ sein Minimum erreicht. Dieser letzten Extraktionszelle 14₁₄ wird coffeinfreier Extrakt über die Leitung 33 zugeführt, der aus der ersten Adsorptionszelle 114₃ des Adsorbers 100 abgepumpt wird. Nach der letzten Extraktionszelle 14₁₄ wird der Zelleninhalt der Zelle 14₁₅ über eine Leitung 34 mit Waschwasser beregnet, wobei in der in Fig. 7 gezeigten Anordnung dieser Waschzelle 14₁₅ noch eine Abtropfzelle 14₁₆ nachgeordnet ist. Nach dem Abtropfen wird der Zelleninhalt in einer Austragszelle 14₁₇ dem Austrag 29 zugeführt, wobei der dort abgeführte (coffeinfreie) Kaffee daran anschließend in einem Trockner 40 durch Zuführung von Luft (L) getrocknet wird, wie dies in Fig. 8 gezeigt ist.

Im Adsorber 100 ist (in Transportrichtung des Adsorptionsmittels gesehen) der letzten Adsorptionszelle 114₁₅ eine Waschzelle 114₁₆ vorgeschaltet, in der das Adsorptionsmittel über Zufuhr von Waschwasser aus einer Waschwasserleitung 134 beregnet wird. Dabei werden die nicht an das Adsorptionsmittel gebundenen Stoffe abgeschwemmt, wobei diese Flüssigkeit über die Leitung 36 als Quellflüssigkeit Verwendung findet.

Der Waschzelle 114₁₆ nachfolgend wird der Adsorber in einer Austragszelle 114₁₇ über einen Austrag 129 dem Reaktivator 103 zugeführt, aus welchem die regenerierte Aktivkohle über einen Eintrag 128 der ersten Zelle 114₁ des Adsorbers 100 zugeführt wird. In der darauf folgenden Zelle 114₂ wird die Aktivkohle vorbeladen und zwar über eine Beregnung durch eine Vorbeladungsflüssigkeit (Leitungen 143, 144).

Wie dies aus Fig. 8 hervorgeht, befindet sich also das Adsorptionsmittel in einem Kreislauf, der nur durch die Abfuhr von Kohlenstoff-Staub (Pfeil V) und die Zufuhr von frischer Aktivkohle (Pfeil K) "gestört" ist.

Der Antrieb des Karussellextrakteurs 10 und des Adsorbers 100, sowie deren Zellenzahlen sind so gewählt, daß das Adsorptionsmittel, welches ca. eine Stunde lang im Reaktivator 103 von Beladungsstoffen befreit wurde, ca. zwei Stunden lang vorbeladen wird, bevor es ca. sechs Stunden lang in den Zellen 114₃ bis 114₁₅ zum Adsorbieren von Coffein dient. Nach dem Adsorbieren wird das Adsorptionsmittel ca. zwei Stunden lang gewaschen, bevor es von neuem regeneriert wird.

Der über den Eintrag 28 dem Karussellextrakteur zugeführte Rohkaffee wird ca. eine Stunde lang in der ersten Zelle 14₁ vorgequollen, um dann ca. sechs Stunden lang Extraktionszellen 14₂ bis 14₁₄ zu durchlaufen. Aus den Extraktionszellen kommend wird der entcoffeinierte Rohkaffee in der Zelle 14₁₅ ca. 0,5 Stunden gewaschen und tropft dann weitere 0,5 Stunden ab. Der abgetropfte, entcoffeinierte Rohkaffee wird anschließend in einem Trockner 40 durch Zuführung von (erwärmter) Luft L ca. 2,3 Stunden lang getrocknet.

### Beispiel

Ein Karussellextrakteur mit insgesamt 12 Zellen (Segmentwinkel 30°), einem äußeren Durchmesser von ca. 1 m und einem inneren Durchmesser von ca. 0,45 m wurde mit 8,7 kg trockenem Rohkaffee pro Zelle gefüllt. Im trockenen Zustand betrug dabei das Breite/Höheverhältnis 0,19 m/0,21 m. Die Bohnen wurden mit Rohkaffee-Extrakt mit einer Extraktkonzentration von ca. 14 % und einer Durchflußrate, die geringer war als die Flutungsrate, besprüht. Bei 80° C wurde dabei der Rohkaffee innerhalb einer Stunde gequollen, ohne daß es daß es zu einem Verblocken der Charge gekommen ist.

## Patentansprüche

1. Vorrichtung zum kontinuierlichen Entcoffeinieren von Rohkaffee, der chargenweise verschiedenen Behandlungsstufen unterzogen wird, in deren erster der Rohkaffee mit zugeführter Quellflüssigkeit vorgequollen wird, wobei das Coffein mit einer wässrigen Extraktionsflüssigkeit extrahiert und an einem vorbeladenen Adsorptionsmittel adsorbiert wird, **dadurch gekennzeichnet,** daß die Vorrichtung mindestens in der ersten Behandlungsstufe zur Extraktion des Coffeins einen Karussell-Extrakteur (10) mit einer Vielzahl gleichartiger, sektorförmiger Zellen (14₁ bis 14ₘ) aufweist, daß ein Behälter mit einem Boden (17) und mit Seitenwänden (12, 13, 15, 16), wobei ein Teil der Seitenwände (12, 13) zueinander winkelig unter Bildung eines konischen Behälterraumes verläuft, zum Vorquellen des Rohkaffees zugleich Zelle (14₁) des Karussell-Extrakteurs (10) ist, und daß der Karussell-Extrakteur derart intermittierend antreibbar ist, daß die den Rohkaffee aufnehmende Zelle während des Vorquellens nicht bewegt wird.

2. Vorrichtung nach Anspruch 1, dadurch gekennzeichnet, daß Seitenwände (12, 13) der sektorförmigen Zellen in einem Winkel von mindestens 20° zueinander stehen.

3. Vorrichtung nach Anspruch 1 oder 2, dadurch gekennzeichnet, daß der Zelle (14₁) in der ersten Behandlungsstufe eine Eintragsvorrichtung (28) zum Einfüllen von zu behandelndem Rohkaffee zugeordnet ist.

4. Vorrichtung nach Anspruch 3, dadurch gekennzeichnet, daß die Eintragsvorrichtung (28) so ausgebildet ist, daß die Zelle mit einer definierten Menge Rohkaffe bis zu einer Höhe befüllbar ist, die der Sektor-Außenbreite entspricht.

5. Vorrichtung nach einem der vorhergehenden Ansprüche, dadurch gekennzeichnet, daß über der ersten Zelle (14₁) eine Berieselungseinrichtung (23, 24, 25, 31) angeordnet ist, über die der eingefüllte Rohkaffee mit Quellflüssigkeit berieselbar ist, die aus einer der ersten Zelle (14₁) zugeordneten Auffangkammer (20₁) unter dem entsprechenden Abschnitt eines feststehenden Schlitzbodens (17) des Karussell-Extrakteurs (10) entnommen wird.

6. Vorrichtung nach Anspruch 5, dadurch gekennzeichnet, daß die erste Auffangkammer (20₁) mit Mitteln (Leitungen 30, 36) zum Zuführen von Quellflüssigkeit und mit Mitteln (Leitung 32) zum niveaugesteuerten (Ventil 26, Schwimmer 27) Abführen von Flüssigkeit versehen ist.

7. Vorrichtung nach einem der vorhergehenden Ansprüche, dadurch gekennzeichnet, daß in Förderrichtung des Karussel-Extrakteurs (10) gesehen mehrere Extraktionszellen (14₂ bis 14ₘ₋₁) mit Berieselungseinrichtungen (23, 24, 25, 31) und jeweils separat zugeordneten Extrakt-Auffangkammern (20₂ bis 20ₘ₋₁) unter den entsprechenden Abschnitten des Siebbodens (17) der ersten Zelle (20₁) nachgeordnet sind, wobei die Kammern (20₁ bis 20ₘ₋₁) unter Bildung eines Gegenstomes - relativ zur Kaffee-Transportrichtung - von Extraktionsflüssigkeit miteinander in Strömungsverbindung stehen, so daß der ersten Kammer (14₁) coffeinreicher Extrakt als Quellwasser zuführbar ist.

8. Vorrichtung nach Anspruch 7, dadurch gekennzeichnet, daß der letzten Extraktionszelle (14ₘ₋₁) eine Waschzelle (14ₘ) mit einer Frischwasser-Berieselungseinrichtung (23, 34, 35) nachgeordnet ist, deren zugeordnete Auffangkammer (20ₘ) mit der Auffangkammer (20ₘ₋₁) der letzten Extraktionszelle (14ₘ₋₁) direkt kommuniziert bzw. in diese übergeht.

9. Vorrichtung nach Anspruch 7 oder 8, dadurch gekennzeichnet, daß der letzten Extraktionszelle (14ₘ₋₁) bzw. der Waschzelle (14ₘ) eine Abtropfzelle (14₁₆) ohne Berieselungseinrichtung nachgeordnet ist.

10. Vorrichtung nach einem der Ansprüche 5 bis 9, dadurch gekennzeichnet, daß die Berieselungseinrichtungen Pumpen (25) umfassen, deren Förderleistung derart einstellbar ist, daß die Berieselungs- bzw. Durchflußmenge geringer ist als die durch Schüttung und Siebboden (17) bestimmte Flutungsmenge.

11. Vorrichtung nach einem der Ansprüche 5 bis 10, dadurch gekennzeichnet, daß die Berieselungseinrichtungen Wärmetauscher (24) zum Erwärmen der Quellflüssigkeit umfassen.

12. Vorrichtung nach einem der Ansprüche 7 bis 11, dadurch gekennzeichnet, daß die Auffangkammern (20₂ bis 20ₘ) mit Mitteln (Ventil 26, Schwimmer 27) zum Abtasten und Regeln des Flüssigkeitsniveaus in den Auffangkammern versehen sind, die bei Überschreiten eines definierten Niveaus Flüssigkeit in die jeweils vorangehende Auffangkammer strömen lassen.

13. Vorrichtung nach einem der vorhergehenden Ansprüche, mit folgenden Merkmalen:
- dem ersten Karussell-Extrakteur (10) ist ein zweiter Karussell-Extrakteur (100) mit einzelnen sektorförmigen Zellen zugeordnet,
- einer Zelle (114₁) des zweiten Karussell-Extrakteurs (100) ist über einen Eintrag (128) das Adsorptionsmittel zuführbar und an anderer Stelle über einen Austrag (129) abführbar,
- Extraktionsflüssigkeit aus dem ersten Karussell-Extrakteur (10) ist über das Adsorptionsmittel in Adsorptionszellen (114₃ bis 114ₙ) im zweiten Karussell-Extrakteur (100) im Gegenstrom führbar, so daß mit Coffein beladene Extraktionsflüssigkeit - neben weiteren Inhaltsstoffen - am Adsorptionsmittel entcoffeinierbar ist,
- die entcoffeinierte Extraktionsflüssigkeit ist wiederum dem ersten Karussell-Extrakteur (10) zuführbar.

14. Vorrichtung nach Anspruch 15,
**dadurch gekennzeichnet,**
daß über der ersten Zelle (114₁) eine Berieselungseinrichtung (123, 134) angeordnet ist, über die das eingefüllte Adsorptionsmittel mit Waschwasser berieselbar ist, wobei die zugeordnete Auffangkammer (120₁) eine Ablaufleitung (140) zum Abführen des Waschwassers aufweist.

15. Vorrichtung nach einem der Ansprüche 15 oder 16,
**dadurch gekennzeichnet,**
daß vor den Adsorptionszellen (114₃ bis 114ₙ) mindestens eine Vorbeladungszelle (114₂) mit einer darunter liegenden Auffangkammer (120₂) vorgesehen ist, aus der eine Vorbeladungsflüssigkeit, vorzugsweise unter Zwischenschaltung eines Ansetz-/Puffertanks (141), abgezogen und einer der Vorbeladungszellen (114₂) zugeordneten Berieselungseinrichtung (123, 142, 144) zuführbar ist.

16. Vorrichtung nach einem der Ansprüche 15 bis 17,
**dadurch gekennzeichnet,**
daß nach den Adsorptionszellen (114₃ bis 114ₙ) mindestens eine Waschzelle (114ₙ₊₁ - 114ₘ) mit einer Waschwasserberieselungseinrichtung (134) und mit einer darunter angeordneten Waschwasser-Auffangkammer (120ₙ₊₁ bis 120ₘ) vorgesehen ist.

17. Vorrichtung nach den Ansprüchen 8 und 18,
**dadurch gekennzeichnet,**
daß die Waschwasser-Auffangkammer (120ₙ₊₁) Einrichtungen (125 bis 127; 36) zum (niveaugesteuerten) Abziehen beladenen Waschwassers aufweist, die mit den Mitteln zum Zuführen von Flüssigkeit der ersten Auffangkammer (20₁) des ersten Karussellextrakteurs (10) kommunizieren.

18. Vorrichtung nach Anspruch 9 und einem der Ansprüche 15 bis 19,
**dadurch gekennzeichnet,**
daß die der ersten Adsorptionszelle (114₃) zugeordnete Auffangkammer (120₃) Einrichtungen (125, 126, 127; 33) zum (niveaugesteuerten) Abziehen von coffeinfreier Extraktionsflüssigkeit aufweist, die mit der letzten Extraktauffangkammer (20ₙ) des ersten Karussellextrakteurs (10) kommunizieren.

19. Vorrichtung nach einem der Ansprüche 15 bis 20,
**dadurch gekennzeichnet,**
daß die Zellen (114₁ bis 114ₘ) des zweiten Karussellextrakteurs (100) Überlaufsicherungseinrichtungen (101, 102) aufweisen, die derart ausgebildet sind, daß eine Menge von Berieselungsflüssigkeit, welche die durch Schüttung des Adsorptionsmittels und den Siebboden (117) bestimmte Perkolationsrate übersteigt, der jeweils darunter liegenden Auffangkammer (120₁ bis 120ₙ) direkt zuführbar ist.

20. Vorrichtung nach einem der Ansprüche 15 bis 21,
**dadurch gekennzeichnet,**
daß der Austrag (129) des zweiten Karussellextrakteurs (100) mit einer Einrichtung (103) zum Abführung von Coffein aus dem Adsorptionsmittel in Verbindung steht, aus der das coffeinfreie Adsorptionsmittel dem Eintrag (128) des zweiten Karussellextrakteurs (100) zuführbar ist.

21. Vorrichtung nach einem der vorhergehenden Ansprüche,
**dadurch gekennzeichnet,**
daß der erste Karussellextrakteur (10) derart antreibbar und mit einer entsprechenden Anzahl von Zellen (14₁ bis 14ₙ) ausgerüstet ist, daß der Rohkaffee in der ersten Behandlungsstufe (Vorquellen) ca. o,5 bis eine Stunde bei 8o°C verbleibt.

22. Vorrichtung nach einem der Ansprüche 9 bis 23,
**dadurch gekennzeichnet,**
daß der erste Karussellextrakteur (10) derart antreibbar und mit einer entsprechenden Anzahl von Zellen (14₁ bis 14ₙ) ausgerüstet ist, daß sich der Rohkaffee ca. sechs Stunden lang in Extraktionszellen (14₂ bis 14ₘ₋₁) befindet.

23. Vorrichtung nach einem der Ansprüche 10 bis 24,
**dadurch gekennzeichnet,**
daß der erste Karussellextrakteur (10) derart antreibbar und mit einer entsprechenden Anzahl von Zellen (14₁ bis 14ₙ) ausgerüstet ist, daß der Rohkaffee ca. 0,5 Stunden in der Waschzelle (14ₘ) berieselt wird.

24. Vorrichtung nach einem der Ansprüche 15 bis 25,
**dadurch gekennzeichnet,**
daß der zweite Karussellextrakteur (100) derart antreibbar und mit einer entsprechenden Anzahl von Zellen (114₁ bis 114ₘ) ausgerüstet ist, daß das Adsorptionsmittel ca. sechs Stunden lang in den Adsortpionszellen (114₃ bis 114ₙ) verbleibt.

25. Vorrichtung nach einem der Ansprüche 18 bis 26,
**dadurch gekennzeichnet,**
daß der zweite Karussellextrakteur (100) derart antreibbar und mit einer entsprechenden Anzahl von Zellen (114₁ bis 114ₘ) ausgerüstet ist, daß das Adsorptionsmittel ca. zwei Stunden in der mindestens einen Waschzelle (114ₙ₊₁ bis 114ₘ) verbleibt.

26. Vorrichtung nach einem der Ansprüche 17 bis 27,
**dadurch gekennzeichnet,**
daß der zweite Karussellextrakteur (100) derart antreibbar und mit einer entsprechenden Anzahl von Zellen (114₁ bis 114ₘ) ausgerüstet ist, daß das Adsorptionsmittel ca. zwei Stunden lang in der Vorbeladungszelle (114₂) verbleibt.

27. Vorrichtung nach Anspruch 22,
**dadurch gekennzeichnet,**
das das Adsorptionsmittel Aktivkohle umfaßt und die Einrichtung (103) zum Abführen von Coffein aus der Aktivkohle einen Ofen umfaßt, in welchem die Aktivkohle ca. eine Stunde bei 800°C reaktivierbar ist.

## Claims

1. Device for continuously decaffeinating raw coffee which is subjected batchwise to various treatment stages, in the first of which the raw coffee is preswollen by an added swelling fluid, the caffeine being extracted by an aqueous extraction fluid and adsorbed on a preloaded adsorbent, characterized in that the device has, at least in the first treatment stage, for extracting the caffeine, a rotary extractor (10) with a multiplicity of similar, sector-type cells (14₁ to 14ₘ), that a container with a bottom (17) and with side walls (12, 13, 15, 16), a part of the side walls (12, 13) extending at a mutual angle to form a conical container space, for preswelling the raw coffee is at the same time the cell (14₁) of the rotary extractor (10), and that the rotary extractor can be driven intermittently in such a way that the cell receiving the raw coffee is not moved during the preswelling.

2. Device according to Claim 1, characterized in that the side walls (12, 13) of the sector-type cells are at a mutual angle of at least 20°.

3. Device according to Claim 1 or 2, characterized in that a feeder device (28) for filling with raw coffee which is to be treated is associated with the cell (14₁) in the first treatment stage.

4. Device according to Claim 3, characterized in that the feeder device (28) is constructed such that the cell can be filled with a defined quantity of raw coffee up to a height which corresponds to the external width of the sector.

5. Device according to one of the preceding claims, characterized in that, above the first cell (14₁), a wetting device (23, 24, 25, 31) is provided, by means of which the raw coffee which has been filled in can be wetted with swelling fluid which is taken from a receiving chamber (20₁) associated with the first cell (14₁) and located below the corresponding section of a stationary slotted bottom (17) of the rotary extractor (10).

6. Device according to Claim 5, characterized in that the first receiving chamber (20₁) is provided with means (lines 30, 36) for feeding swelling fluid and with means (line 32) for level-controlled (valve 26, float 27) discharge of fluid.

7. Device according to one of the preceding claims, characterized in that a plurality of extraction cells (14₂ to 14ₘ₋₁) with wetting devices (23, 24, 25, 31) and in each case separately associated extract-receiving chambers (20₂ to 20ₘ₋₁) are arranged below the corresponding sections of the perforated bottom (17) downstream of the first cell (20₁), as viewed in the direction of transport of the rotary extractor (10), the chambers (20₁ to 20ₘ₋₁) being in mutual flow communication to form a counter-current - relative to the direction of transport of the coffee - of extraction fluid, so that caffeine-rich extract can be fed as swelling water to the first chamber (14₁).

8. Device according to Claim 7, characterized in that a washing cell (14ₘ) which has a fresh water wetting device (23, 34, 35) and the associated receiving chamber (20ₘ) of which directly communicates with or merges into the receiving chamber (20ₘ₋₁) of the last extraction cell (14ₘ₋₁), is provided downstream of the last extraction cell (14ₘ₋₁).

9. Device according to Claim 7 or 8, characterized in that a dripping-off cell (14₁₆) without a wetting device is provided downstream of the last extraction cell (14ₘ₋₁) or washing cell (14ₘ).

10. Device according to one of Claims 5 to 9, characterized in that the wetting devices comprise pumps (25), the delivery rate of which can be adjusted in such a way that the wetting or flow rate is lower than the flooding rate determined by the dumped charge and the perforated bottom (17).

11. Device according to one of Claims 5 to 10, characterized in that the wetting devices comprise heat exchangers (24) for heating the swelling fluid.

12. Device according to one of Claims 7 to 11, characterized in that the receiving chambers (20₂ to 20ₘ) are provided with means (valve 26, float 27) for sensing and controlling the fluid level in the receiving chambers, which means cause fluid to flow into the particular preceding receiving chamber when a defined level is exceeded.

13. Device according to one of the preceding claims, having the following features:
- a second rotary extractor (100) having individual sector-type cells is associated with the first rotary extractor (10),
- the adsorbent can be fed via an inlet (128) to a cell (114₁) of the second rotary extractor (100) and discharged via an outlet (129) at another point,
- extraction fluid from the first rotary extractor (10) can be passed in countercurrent over the adsorbent in adsorption cells (114₃ to 114ₙ) in the second rotary extractor (100), so that extraction fluid loaded with caffeine - in addition to further ingredients - can be decaffeinated on the adsorbent, and
- the decaffeinated extraction fluid can be recycled to the first rotary extractor (10).

14. Device according to Claim 13, characterized in that, above the first cell (114₁), a wetting device (123, 134) is provided, by means of which the adsorbent filled in can be wetted with washing water, the associated receiving chamber (120₁) having an outflow line (140) for discharging the washing water.

15. Device according to one of Claims 13 or 14, characterized in that, upstream of the adsorption cells (114₃ to 114ₙ), at least one preloading cell (114₂) having a receiving chamber (120₂) is provided which is located below and from which a preloading fluid can, preferably with the insertion of a preparation/buffer tank (141), be withdrawn and fed to a wetting device (123, 142, 144) associated with the preloading cells (114₂).

16. Device according to one of Claims 13 to 15, characterized in that, downstream of the adsorption cells (114₃ to 114ₙ) at least one washing cell (114ₙ₊₁ - 114ₘ) having a washing water wetting device (134) and a washing water receiving chamber (120ₙ₊₁ to 120ₘ) located below the latter is provided.

17. Device according to Claims 6 and 16, characterized in that the washing water receiving chamber (120ₙ₊₁) has devices (125 to 127; 36) for (level-controlled) withdrawal of loaded washing water, which means communicate with the means for feeding fluid to the first receiving chamber (20₁) of the first rotary extractor (10).

18. Device according to Claim 7 and one of Claims 13 to 17, characterized in that the receiving chamber (120₃) associated with the first adsorption cell (114₃) has devices (125, 126, 127; 33) for the (level-controlled) withdrawal of caffeine-free extraction fluid, which devices communicate with the last extract receiving chamber (20ₙ) of the first rotary extractor (10).

19. Device according to one of Claims 13 to 18, characterized in that the cells (114₁ to 114ₘ) of the second rotary extractor (100) have overflow prevention devices (101, 102), which are constructed in such a way that a rate of wetting fluid which exceeds the percolation rate determined by the dumped charge of adsorbent and the perforated bottom (117) can be fed directly to the particular receiving chamber (120₁ to 120ₙ) located below.

20. Device according to one of Claims 13 to 19, characterized in that the discharge (129) of the second rotary extractor (100) is connected to a device (103) for removing caffeine from the adsorbent, from which device the caffeine-free adsorbent can be fed to the feeder (128) of the second rotary extractor (100).

21. Device according to one of the preceding claims, characterized in that the first rotary extractor (10) can be driven in such a way, and is fitted with the corresponding number of cells (14₁ to 14ₙ), that the raw coffee remains in the first treatment stage (preswelling) for about 0.5 to 1 hour at 80°C.

22. Device according to one of Claims 7 to 21, characterized in that the first rotary extractor (10) can be driven in such a way, and is fitted with a corresponding number of cells (14₁ to 14ₙ), that the raw coffee remains for a period of about 6 hours in extraction cells (14₂ to 14ₘ₋₁).

23. Device according to one of Claims 8 to 22, characterized in that the first rotary extractor (10) can be driven in such a way, and is fitted with a corresponding number of cells (14₁ to 14ₙ), that the raw coffee is wetted for about 0.5 hours in the washing cell (14ₘ).

24. Device according to one of Claims 13 to 23, characterized in that the second rotary extractor (100) can be driven in such a way, and is fitted with a corresponding number of cells (114₁ to 114ₘ), that the adsorbent remains for a period of about 6 hours in the adsorption cells (114₃ to 114ₙ).

25. Device according to one of Claims 16 to 24, characterized in that the second rotary extractor (100) can be driven in such a way, and is fitted with a corresponding number of cells (114₁ to 114ₘ), that the adsorbent remains for about 2 hours in the washing cell (114ₙ₊₁ to 114ₘ) of which there is at least one.

26. Device according to one of Claims 15 to 25, characterized in that the second rotary extractor (100) can be driven in such a way, and is fitted with a corresponding number of cells (114₁ to 114ₘ), that the adsorbent remains for a period of about 2 hours in the preloading cell (114₂).

27. Device according to Claim 20, characterized in that the adsorbent comprises activated carbon and the device (103) for removing caffeine from the activated carbon comprises an oven, in which the activated carbon can be reactivated in about 1 hour at 800°C.

## Revendications

1. Installation de décaféination en continu de café vert qui est soumis par lots à différents étages de traitement dans lesquels en premier lieu le café vert est préalablement mis à tremper avec un liquide de trempage ajouté, la caféine étant extraite par un liquide d'extraction aqueux et étant adsorbée par un milieu d'adsorption saturé au préalable, caractérisée en ce que l'installation présente, au moins dans le premier étage de traitement pour l'extraction de la caféine, un extracteur à carrousel (10) comportant une pluralité de cellules (14₁ à 14ₘ) de même genre et en forme de secteur, en ce qu'un récipient comportant un fond (17) et des parois latérales (12, 13, 15, 16), une partie des parois latérales (12, 13) s'étendant l'une par rapport à l'autre suivant un angle en formant un espace conique de récipient, et destiné au trempage préalable du café vert est également une cellule (14₁) de l'extracteur à carrousel (10) et en ce que l'extracteur à carrousel est entraîné de façon intermittente de manière que la cellule qui reçoit le café vert n'est pas déplacée pendant le trempage préalable.

2. Installation suivant la revendication 1, caractérisée en ce que les parois latérales (12, 13) des cellules en forme de secteur forment un angle d'au moins 20° l'une par rapport à l'autre.

3. Installation suivant la revendication 1 ou 2, caractérisée en ce qu'à la cellule (14₁) du premier étage de traitement est adjoint un dispositif d'alimentation (28) pour verser du café vert à traiter.

4. Installation suivant la revendication 3, caractérisée en ce que le dispositif d'alimentation (28) est réalisé de façon que la cellule puisse être remplie avec une quantité déterminée de café vert, jusqu'à une hauteur qui correspond à la largeur externe du secteur.

5. Installation suivant l'une quelconque des revendications précédentes, caractérisée en ce qu'au-dessus de la première cellule (14₁) est agencé un dispositif d'arrosage (23, 24, 25, 31) par lequel le café vert versé peut être arrosé avec un liquide de trempage qui est retiré d'une chambre de collecte (20₁) adjointe à la première cellule (14₁), en dessous du tronçon correspondant d'un plateau à fentes (17) fixe de l'extracteur à carrousel (10).

6. Installation suivant la revendication 5, caractérisée en ce que la première chambre de collecte (20₁) est équipée de moyens (conduites 30, 36) pour l'alimentation en liquide de trempage et de moyens (conduite 32) pour l'évacuation de liquide commandée par le niveau (vanne 26, flotteur 27).

7. Installation suivant l'une quelconque des revendications précédentes, caractérisée en ce que, vu dans le sens de l'avance de l'extracteur à carrousel (10), plusieurs cellules d'extraction (14₂ à 14ₘ₋₁) comportant des dispositifs d'arrosage (23, 24, 25, 31) et des chambres de collecte d'extrait (20₂ à 20ₘ₋₁), chaque fois adjointes séparément, sous les tronçons correspondants du fond en tamis (17) sont agencées à la suite de la première cellule (20₁), les chambres (20₁ à 20ₘ₋₁) étant en liaison d'écoulement l'une avec l'autre, en formant un écoulement inverse de liquide d'extraction par rapport au sens de transport du café, de sorte qu'à la première chambre (14₁) puisse être fourni en tant qu'eau de trempage un extrait plus riche en caféine.

8. Installation suivant la revendication 7, caractérisée en ce qu'est agencée à la suite de la dernière cellule d'extraction (14ₘ₋₁) une cellule de lavage (14ₘ) qui comporte un dispositif d'arrosage à eau fraîche (23, 34, 35) et dont la chambre de collecte adjointe (20ₘ) communique directement avec la, ou se transforme en, chambre de collecte (20ₘ₋₁) de la dernière cellule d'extraction (14ₘ₋₁).

9. Installation suivant l'une des revendications 7 et 8, caractérisée en ce qu'à la suite de la dernière cellule d'extraction (14ₘ₋₁) ou de la cellule de lavage (14ₘ) est agencée une cellule d'égouttage (14₁₆) sans dispositif d'arrosage.

10. Installation suivant l'une quelconque des revendications 5 à 9, caractérisée en ce que les dispositifs d'arrosage comportent des pompes (25) dont le débit peut être réglé de façon que la quantité d'arrosage ou le débit d'arrosage puisse être inférieur à la quantité d'écoulement déterminée par le remplissage et par le fond en tamis (17).

11. Installation suivant l'une quelconque des revendications 5 à 10, caractérisée en ce que les dispositifs d'arrosage comprennent des échangeurs de chaleur (24) pour chauffer le liquide de trempage.

12. Installation suivant l'une quelconque des revendications 7 à 11, caractérisée en ce que les chambres de collecte (20₂ à 20ₘ) sont équipées de moyens (vanne 26, flotteur 27) pour la détection et le réglage du niveau de liquide dans les chambres de collecte qui permettent un écoulement dans la chambre de collecte respectivement précédente lors d'un dépassement d'un niveau déterminé.

13. Installation suivant l'une quelconque des revendications précédentes, caractérisée en ce qu'elle comporte les particularités suivantes :
- au premier extracteur à carrousel (10) est adjoint un autre extracteur à carrousel (100) comportant des cellules séparées en forme de secteur,
- le milieu d'adsorption peut être fourni dans une cellule (114₁) du second extracteur à carrousel (100) par l'intermédiaire d'une alimentation (128) et peut être retiré en un autre endroit par un évacuation (129),
- du liquide d'extraction peut être amené en écoulement inverse dans le second extracteur à carrousel (100), dans des cellules d'adsorption (114₃ à 114ₙ), depuis le premier extracteur à carrousel (10) sur le milieu d'adsorption, de sorte que du liquide d'extraction chargé de caféine, en plus d'autres substances contenues, peut être décaféiné par le milieu d'adsorption,
- le liquide d'extraction décaféiné peut être à nouveau amené au premier extracteur à carrousel (10).

14. Installation suivant la revendication 13, caractérisée en ce qu'au-dessus de la première cellule (114₁) est agencé un dispositif d'arrosage (123, 134) par lequel le milieu d'adsorption versé peut être arrosé avec de l'eau de lavage, la chambre de collecte (120₁) adjointe présentant une conduite d'évacuation (140) pour l'évacuation de l'eau de lavage.

15. Installation suivant l'une ou l'autre des revendications 13 et 14, caractérisée en ce qu'avant les cellules d'adsorption (114₃ à 114ₙ) il est prévu au moins une cellule de saturation préalable (114₂) qui comporte une chambre de collecte (120₂) située là-dessous et dont un liquide de saturation préalable peut être retiré, de préférence avec interposition d'un réservoir ajouté et tampon (141), et peut être fourni à un dispositif d'arrosage (123, 142, 144) adjoint aux cellules de saturation préalable (114₂).

16. Installation suivant l'une quelconque des revendications 13 à 15, caractérisée en ce qu'à la suite des cellules d'adsorption (114₃ à 114ₙ) il est prévu au moins une cellule de lavage (114ₙ₊₁ à 114ₘ) comportant un dispositif d'arrosage avec de l'eau de lavage (134) et comportant une chambre de collecte d'eau de lavage (120ₙ₊₁ à 120ₘ) agencée là-dessous.

17. Installation suivant l'une ou l'autre des revendications 8 et 16, caractérisée en ce que la chambre de collecte d'eau de lavage (120ₙ₊₁) présente, pour le retrait (commandé par niveau) d'eau de lavage chargée, des dispositifs (125 à 127; 36) qui communiquent avec les moyens pour la fourniture de liquide à la première chambre de collecte (20₁) du premier extracteur à carrousel (10).

18. Installation suivant la revendication 9 et l'une des revendications 13 à 17, caractérisée en ce que la chambre de collecte (120₃) adjointe à la première cellule d'adsorption (114₃) présente, pour le retrait (commandé par niveau) de liquide d'extraction sans caféine, des dispositifs (125, 126, 127; 33) qui communiquent avec la dernière chambre de collecte d'extrait (20ₙ) du premier extracteur à carrousel (10).

19. Installation suivant l'une quelconque des revendications 13 à 18, caractérisée en ce que les cellules (114₁ à 114ₘ) du second extracteur à carrousel (100) présentent des dispositifs de sécurité de débordement (101, 102) réalisés de façon qu'une quantité de liquide d'arrosage, qui dépasse le taux de percolation déterminé par remplissage du milieu d'adsorption et par le fond en tamis (117), peut être fournie directement à la chambre de collecte (120₁ à 120ₙ) située chaque fois là-dessous.

20. Installation suivant l'une quelconque des revendications 13 à 19, caractérisée en ce que l'évacuation (129) du second extracteur à carrousel (100) est en liaison avec un dispositif (103) qui est agencé pour évacuer la caféine du milieu d'adsorption et dont le milieu d'adsorption sans caféine peut être fourni à l'alimentation (128) du second extracteur à carrousel (100).

21. Installation suivant l'une quelconque des revendications précédentes, caractérisée en ce que le premier extracteur à carrousel (10) peut être entraîné, et est équipé d'un nombre correspondant de cellules (14₁ à 14ₙ), de façon que le café vert reste approximativement 0,5 à 1 heure à 80°C dans le premier étage de traitement (trempage préalable).

22. Installation suivant l'une quelconque des revendications 9 à 21, caractérisée en ce que le premier extracteur à carrousel (10) peut être entraîné, et est équipé d'un nombre correspondant de cellules (14₁ à 14ₙ), de façon que le café vert se trouve durant six heures dans des cellules d'extraction (14₂ à 14ₘ₋₁).

23. Installation suivant l'une quelconque des revendications 10 à 22, caractérisée en ce que le premier extracteur à carrousel (10) peut être entraîné, et est équipé d'un nombre correspondant de cellules (14₁ à 14ₙ) de façon que le café vert soit arrosé approximativement 0,5 heure dans la cellule de lavage (14ₘ).

24. Installation suivant l'une quelconque des revendications 13 à 23, caractérisée en ce que le second extracteur à carrousel (100) peut être entraîné, et est équipé d'un nombre correspondant de cellules (114₁ à 114ₘ) de façon que le milieu d'adsorption reste approximativement durant six heures dans les cellules d'adsorption (114₃ à 114ₙ).

25. Installation suivant l'une quelconque des revendications 16 à 24, caractérisée en ce que le second extracteur à carrousel (100) peut être entraîné, et est équipé d'un nombre correspondant de cellules (114₁ à 114ₘ) de façon que le milieu d'adsorption reste approximativement deux heures dans au moins une cellule de lavage (114ₙ₊₁ à 114ₘ).

26. Installation suivant l'une quelconque des revendications 15 à 25, caractérisée en ce que le second extracteur à carrousel (100) peut être entraîné, et est équipé d'un nombre correspondant de cellules (114₁ à 114ₘ), de façon que le milieu d'adsorption reste durant approximativement deux heures dans la cellule de saturation préalable (114₂).

27. Installation suivant la revendication 20, caractérisée en ce que le milieu d'adsorption comprend du charbon actif et en ce que le dispositif (103) pour évacuer la caféine du charbon actif comporte un four dans lequel le charbon actif peut être réactivé en approximativement 1 heure à 800°C.
